# FASCICULE DE BREVET EUROPEEN

(11) **EP 1 193 099 B1**
(45) Date de publication et mention de la délivrance du brevet: **22.09.2004**
(21) Numéro de dépôt: 01402271.9
(22) Date de dépôt: 31.08.2001
(51) Int. Cl.: B60K 5/12, F16F 9/50, F16F 9/19

(54) **Biellette de suspension d'un groupe moto-propulseur de véhicule automobile et dispositif de suspension comportant une telle biellette**
Aufhängungstange einer Antriebseinheit eines Kraftfahrzeuges und Aufhängevorrichtung mit einer solchen Stange
Suspension link rod for a motor vehicle drive unit and suspension arrangement comprising same

(30) Priorité: 29.09.2000 FR 0012442
(43) Date de publication de la demande: 03.04.2002
(73) Titulaire: Peugeot Citroen Automobiles, 92200 Neuilly Sur Seine (FR)
(72) Inventeur: Henon, Daniel, 95450 Ableiges (FR)
(74) Mandataire: De Cuenca, Emmanuel Jaime

(56) Documents cités:
- EP-A- 0 338 584
- FR-A- 2 415 753
- FR-A- 2 587 773
- FR-A- 2 744 677
- GB-A- 2 070 730
- PATENT ABSTRACTS OF JAPAN vol. 008, no. 177 (M-317), 15 août 1984 (1984-08-15) & JP 59 069543 A (NISSAN JIDOSHA KK), 19 avril 1984 (1984-04-19)

## Description

L'invention se rapporte à une biellette de suspension d'un groupe moto-propulseur de véhicule automobile, ainsi qu'à un dispositif de suspension comportant une telle biellette.

Le couple nécessaire à la mobilité d'un véhicule est fourni par un groupe moto-propulseur qui comprend des sources de vibrations mécaniques telles qu'un moteur thermique et une boîte de vitesses. Pour le confort des occupants du véhicule, le groupe moto-propulseur est fixé à la structure du véhicule par l'intermédiaire notamment d'éléments de caoutchouc qui ont pour mission de filtrer ces vibrations. Des suspensions moteur utilisent également une ou plusieurs biellettes pour relier le groupe motopropulseur à la structure du véhicule.

En effet, les véhicules automobiles se déplacent grâce à la poussée de tractions des pneumatiques sur le sol. Cette poussée est l'effort résultant du couple de sortie du pont d'embrayage. La poussée a pour intensité le couple du moteur modifié par les démultiplications du pont d'embrayage et du rapport de boîte de vitesses engagé. Ce couple peut être très important dans les rapports de première vitesse ou de marche arrière. La rotation de l'arbre de transmission est un mouvement relatif par rapport au groupe motopropulseur. Pour que cet arbre tourne, le groupe motopropulseur doit être bloqué en rotation. Ce blocage en rotation est assuré par les biellettes dites "de reprise de couple" qui prennent appui sur des éléments de structure.

En plus des efforts dynamiques que sont les vibrations, le groupe moto-propulseur génère également des efforts dits statiques. Ces efforts statiques sont dus à la gravité ainsi qu'à la reprise de couple de traction lors du fonctionnement du moteur. Pour que les vibrations dues à la rotation du moteur au régime ralenti ne produisent pas de vibrations désagréables, faut rendre nuls les efforts statiques du moteur.

Lorsque les biellettes de suspension moteur sont implantées sensiblement horizontalement, les efforts dus à la pesanteur du groupe moto-propulseur ainsi que les dispersions dimensionnelles de la structure génèrent peu d'efforts statiques au ralenti.

Dans certains cas, les biellettes sont disposées sensiblement verticalement, notamment pour limiter les sollicitations générées par la route telles que le hachis. Lorsque les biellettes sont verticales, elles sont sensibles aux dispersions de la structure et de la mécanique. C'est à dire que le montage des biellettes nécessite un réglage fin, pour disposer le groupe moto-propulseur dans une position d'équilibre ne générant pas d'efforts statiques au ralenti.

Ce réglage des biellettes, qui est effectué par un opérateur, est rendu difficile en raison du volume d'accès toujours plus réduit dans les compartiments moteur des nouveaux véhicules. Par exemple, les extrémités des biellettes peuvent être pourvues d'un oeil fixé au bout d'une tige filetée apte à être vissée sur la structure. Dans ce cas c'est un système à vis et écrou qui permet le réglage.

Dans un autre système connu, l'oeil situé à l'extrémité de la biellette est fixé au moyen d'un axe apte à coulisse dans un trou oblong. C'est-à-dire que l'axe de fixation de la biellette peut coulisser dans le trou oblong avant son serrage, la vis étant serrée sans s'opposer à l'effort de gravité qui s'exerce sur le groupe motopropulseur.

Le document FR-A-2 587 773 décrit une biellette de suspension d'un groupe moto-propulseur automobile conforme au préambule de la revendication 1.

La biellette décrite dans ce document comprend par ailleurs un piston déplacé dans un cylindre par les oscillations à amortir et percé de canaux de transfert d'un fluide hydraulique, ledit amortisseur étant adapté pour n'exercer qu'un amortissement nul ou faible des oscillations de faible amplitude. Plus précisément, le piston est combiné avec un organe, étanche au fluide hydraulique et librement mobile entre deux butées, sous l'effet de la pression de ce fluide, l'organe permet d'accumuler sur l'une ou l'autre de ses faces un certain volume de fluide qui est ainsi soustrait à l'obligation de traverser les canaux du piston dans les petites oscillations.

Le document FR-A-2 415 753 décrit un amortisseur de suspension de véhicule constitué de deux éléments (cylindre et piston solidaire d'une tige) fixés respectivement à une partie suspendue et à une partie non suspendue d'un véhicule. Cet amortisseur est caractérisé en ce que l'un des deux éléments le constituant (par exemple le cylindre) comporte des moyens permettant une déformation lente dudit élément, pour compenser une déformation lente de la suspension du véhicule, et des moyens de blocage empêchant la déformation du même élément de l'amortisseur lorsque la vitesse de déformation tend à dépasser une valeur limite choisie. Ces moyens permettant une déformation lente ou un blocage dudit élément sont constitués d'un deuxième système de piston à clapets élastiques relié à une tige et coulissant dans le corps du cylindre.

Un but de la présente invention est de proposer une biellette de suspension d'un groupe moto-propulseur de véhicule automobile palliant tout ou partie des inconvénients relevés ci-dessus.

Ce but est atteint par le fait que la biellette de suspension d'un groupe moto-propulseur de véhicule automobile destinée à être montée sensiblement verticalement, pour relier un groupe moto-propulseur à la structure d'un véhicule est apte à s'allonger, respectivement se rétracter, lorsqu'elle est soumise à des efforts de traction, respectivement de compression, et comporte des moyens de régulation de longueur conformés pour, d'une part, permettre une variation de longueur de la biellette lorsque celle-ci est soumise à des efforts de compression/traction dits "de faible intensité", tels que ceux générés lors du montage de la biellette sur le véhicule et, d'autre part, empêcher une variation de longueur de la biellette lorsque celle-ci est soumise à des efforts de compression/traction dits "d'intensité élevée" qui sont supérieurs aux efforts de montage, les efforts d'intensité élevée correspondant, par exemple, aux efforts générés lors du fonctionnement du groupe motopropulseur et en ce que la biellette est constituée d'un ensemble comprenant un piston et un cylindre, la première extrémité de la biellette étant solidaire de la tige du piston tandis que la seconde extrémité est solidaire du cylindre, les moyens de régulation de longueur comportant un fluide incompressible disposé dans le cylindre, des moyens formant clapet aptes à assurer le passage du fluide entre deux volumes de travail situés respectivement de part et d'autre du piston, et des moyens de compensation du volume de la tige entrant ou sortant du cylindre, et les moyens de compensation sont constitués d'un système à clapet dimensionné pour permettre, d'une part le passage du fluide entre un volume de travail et un volume de compensation lors d'une compression/traction de faible intensité et, d'autre part, bloquer ce même passage lors d'un effort de compression/traction d'intensité élevée.

Par ailleurs, l'invention peut comporter l'une ou plusieurs des caractéristiques suivantes :
- les moyens de régulation de longueur assurent automatiquement les variations et le blocage de longueur de la biellette en réponse aux sollicitations en traction/compression,
- la biellette comporte deux parties aptes coulisser l'une par rapport à l'autre,
- les moyens formant clapet sont formés sur le piston et sont dimensionnés pour permettre, d'une part le passage du fluide d'un volume de travail à l'autre lors d'une compression/traction de faible intensité, et pour, d'autre part, bloquer le passage du fluide au travers du piston lors d'un effort de compression/traction d'intensité élevée,
- le système à clapet comporte un bouchon hydraulique qui coopère avec le passage du fluide vers le volume de compensation, le bouchon étant agencé de façon à permettre la circulation du fluide entre un volume de travail et le volume de compensation lors d'une compression/traction de faible intensité et, d'autre part, bloquer de façon étanche par clippage ce même passage lors d'un effort de compression/traction d'intensité élevée.

Un autre but de l'invention est de proposer un dispositif de suspension d'un groupe moto-propulseur comportant une telle biellette.

Ce but est atteint par le fait que le dispositif de suspension d'un groupe moto-propulseur de véhicule automobile reliant un groupe moto-propulseur à la structure d'un véhicule, comporte au moins une biellette de suspension conforme à l'une quelconque des caractéristiques ci-dessus.

Selon une autre particularité le dispositif de suspension comporte deux biellettes de suspension conforme à l'une quelconque des caractéristiques ci-dessus et disposées respectivement à l'avant et à l'arrière du groupe moto-propulseur.

Selon une autre particularité une première des biellettes relie le groupe moto-propulseur du véhicule à un élément de structure avant du véhicule telle qu'une traverse, la seconde biellette reliant un carter d'embrayage et/ou de boîte de vitesses à un élément de structure dit arrière tel qu'une traverse ou un berceau.

D'autres particularités et avantages apparaîtront à la lecture de la description ci-après, faite en référence aux figures dans lesquelles :
- la figure 1 représente une vue de dessus et en perspective d'un dispositif de suspension d'un groupe moto-propulseur conforme à un mode de réalisation préféré de l'invention,
- la figure 2 représente une vue en coupe d'un détail du dispositif de la figure 1, illustrant une biellette de suspension conforme à un premier mode de réalisation de l'invention,
- la figure 3 représente une vue en coupe d'une biellette de suspension moteur selon un second mode de réalisation de l'invention.

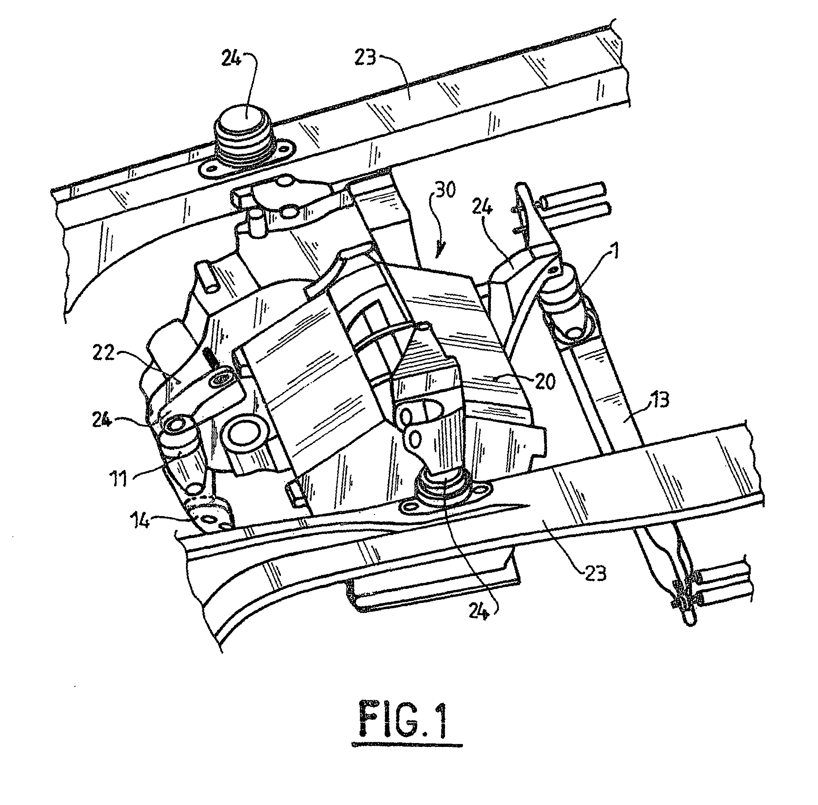

Le groupe moto-propulseur 30 représenté à la figure 1 comprend un moteur 20 thermique accouplé à un ensemble 22 constitué d'un embrayage et d'une boîte de vitesses. Le groupe moto-propulseur 30 est disposé entre deux éléments 23 de structure longitudinaux tels que des brancards parallèles à l'axe longitudinal du véhicule.

De manière classique, le groupe moto-propulseur 30 est relié aux deux brancards 23 par l'intermédiaire respectivement de deux cales porteuses 24.

La partie avant du groupe moto-propulseur 30 est reliée à un élément 13 de structure transversal avant du véhicule tel qu'une traverse avant. La liaison du groupe moto-propulseur 30 à la traverse avant 13 est réalisée au moyen d'une biellette 1 sensiblement verticale qui sera décrite plus en détail ci-après. L'extrémité inférieure de la biellette 1 avant est reliée à la traverse avant 13, tandis que son extrémité supérieure est reliée à une potence 24 solidaire de la partie avant du groupe moto-propulseur 30, et de préférence du moteur 20.

La partie arrière du groupe moto-propulseur 30 est reliée quant à elle à un élément 24 de structure arrière tel qu'une traverse arrière ou un berceau supportant le mécanisme de direction (non représenté) du véhicule. Le groupe moto-propulseur 30 est relié au berceau ou à la traverse arrière 14 au moyen d'une biellette 11 arrière qui est également sensiblement verticale.

Comme précédemment, l'extrémité inférieure de la biellette arrière 11 est reliée au berceau ou à la traverse arrière 14, tandis que son extrémité supérieure est reliée, par exemple au moyen d'une potence 24, au carter 22 de l'ensemble embrayage/boîte de vitesses.

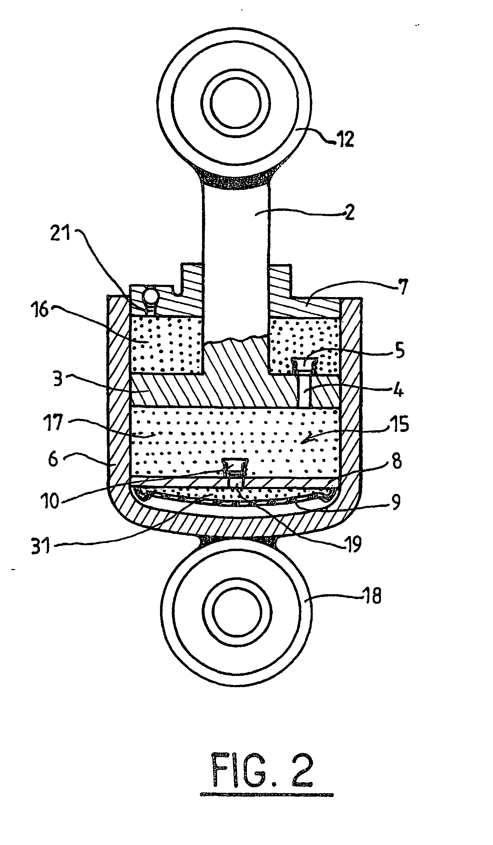

La structure des biellettes 1, 11 va à présent être décrite en référence à la figure 1. Dans l'exemple de réalisation préféré représenté à la figure 2, la biellette 1 est constituée de deux parties 2, 3 aptes coulisser l'une par rapport à l'autre. Plus précisément, la biellette 1 est constituée d'un ensemble piston 3 et cylindre 6.

Une première 12 extrémité de la biellette 1 est constituée d'un oeil prévu pour contenir une articulation permettant l'oscillation de la biellette 1. Cette première extrémité 12 de la biellette 1 est formée à l'extrémité d'une tige 2 solidaire du piston 3.

La seconde 18 extrémité de la biellette 1 est également constituée d'un oeil prévu pour une articulation. Cette seconde extrémité 18 est solidaire du cylindre 6.

Le piston 3 définit dans le cylindre 6 deux volumes 16, 17 de travail pour un fluide incompressible 15. A cet effet, l'extrémité supérieure du cylindre 6 est refermée par un palier 7 étanche assurant le guidage de la tige 2 du piston 3. Le palier 7 comporte un orifice 11 obturable prévu pour le remplissage du cylindre 6.

Le piston 3 est pourvu d'un conduit 4 reliant les deux volumes 16, 17 de travail situés de part et d'autre du piston 3. Le conduit 4 du piston 3 coopère avec un clapet 5 mobile. Ce clapet 5 est constitué, par exemple, d'un bouchon mobile maintenu éloigné de son siège au moyen d'un ressort.

L'un 17 des volumes 16, 17 de travail comporte un orifice de passage 19 communiquant avec un volume 31 de compensation situé dans le fond du cylindre 6. Classiquement, le volume 31 de compensation est délimité par une membrane souple 9 séparant le fluide incompressible 15 d'un gaz 25 tel que de l'air. Le passage 19 coopère avec un clapet 10 de compensation. Le clapet 10 de compensation est constitué, par exemple, d'un bouchon mobile couplé à un ressort qui exerce un effort tendant à le maintenir éloigné de son siège.

Le clapet mobile 5 et le clapet 10 de compensation sont dimensionnés de façon à autoriser une faible variation de longueur de la biellette 1 lorsque que celle-ci est soumise à des efforts de compression ou de traction d'intensité déterminée faible.

Le clapet mobile 5 et le clapet 10 de compensation sont de plus dimensionnés de façon à empêcher toute variation de longueur de la biellette 1 lorsque que celle-ci est soumise à des efforts de compression ou de traction d'intensité élevée déterminée.

Plus précisément, lorsque la biellette 1 est soumise à des efforts de compression de faible intensité, correspondant, par exemple, aux efforts subis lors du montage du groupe moto-propulseur 30 sur le véhicule, le clapet 5 mobile est déplacé hors de son siège pour permettre la circulation du fluide 15 de la chambre inférieure 17 vers la chambre supérieure 16. La tige 2 pénètre ainsi vers l'intérieur du cylindre 6. Simultanément, le clapet 10 de compensation est déplacé hors de son siège, pour autoriser un déplacement de fluide 15 de la chambre inférieure 17 vers le volume 31 de compensation.

Lorsque la biellette 1 est soumise à des efforts de traction de faible intensité, le clapet 5 mobile est encore déplacé hors de son siège pour permettre la circulation du fluide 15 de la chambre supérieure 16 vers la chambre inférieure 17. La tige 2 coulisse vers l'extérieur du cylindre 6. Simultanément, le clapet 10 de compensation est déplacé hors de son siège, pour autoriser un retour du fluide 15 du volume 31 de compensation vers la chambre inférieure 17.

Ainsi, lors du montage du groupe moto-propulseur 30 sur la structure du véhicule, les biellettes 1,11, qui sont soumises à des efforts de faible intensité et à des déplacements lents, peuvent varier en longueur, pour s'adapter à la position d'équilibre du groupe moto-propulseur 30.

En revanche, lorsque les biellettes 1, 11 sont soumises à des efforts de compression d'intensité élevée qui sont supérieurs aux efforts générés lors du montage, le clapet 10 de compensation est poussé sur son siège dans une position dans laquelle il obture de manière étanche le passage 19 vers le volume de compensation. De cette façon, le piston 3 et la tige 2 sont bloqués et la biellette 1 conserve une longueur déterminée.

Lorsque les biellettes 1, 11 sont soumises à des efforts de traction d'intensité élevée qui sont supérieurs aux efforts générés lors du montage, le clapet 5 mobile est poussé sur son siège dans une position dans laquelle il obture de manière étanche le conduit 4. Ainsi, le piston 3 et la tige 2 sont également bloqués et la biellette 1 conserve une longueur déterminée.

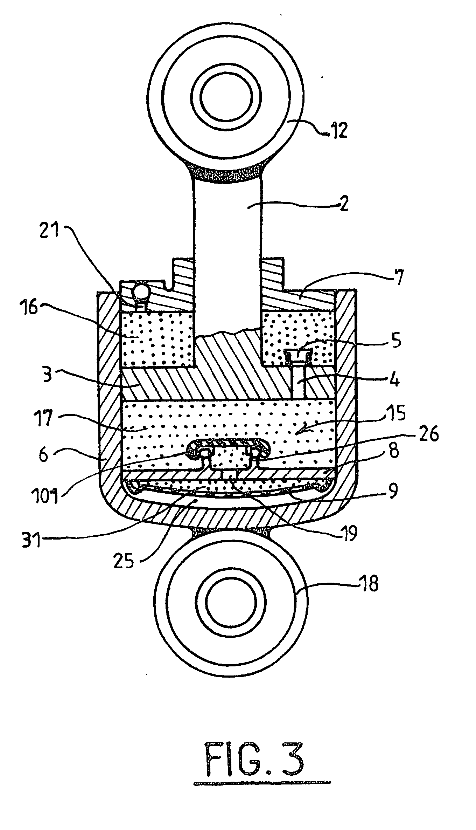

La figure 3 illustre une variante de réalisation de la biellette qui diffère de la biellette décrite ci-dessus uniquement par la forme des moyens formant clapet vers la chambre 31 de compensation. Les éléments identiques à ceux décrits ci-dessus sont désignés par les mêmes références numériques.

Dans la forme de réalisation de la figure 3, l'orifice de passage 19 vers le volume de compensation est entouré d'une nervure 26 circulaire faisant saillie à l'intérieur de la chambre de travail 17 inférieure. Un bouchon 101 est disposé ou clipé partiellement sur la nervure 26 de façon à permettre la circulation du fluide 15 entre la chambre inférieure 17 et le volume 31 de compensation lorsque la biellette 1 est soumise à des efforts de faible intensité.

En revanche, lorsque la biellette 1 est soumise à des efforts d'intensité élevée (compression notamment), la pression produite dans la chambre 17 inférieure va provoquer le clippage étanche du bouchon 101 sur son siège (nervure 26). Dès lors, le système de clapet est bloqué et confère à la biellette une longueur fixe déterminée.

Des efforts d'intensité élevée correspondent, par exemple, aux efforts générés lors du fonctionnement du groupe motopropulseur 30, tel que lors du démarrage du moteur. Les efforts dits de faible intensité peuvent être de l'ordre, par exemple de 10daN, tandis que les efforts d'intensité élevée peuvent être de l'ordre de 500 à 2000daN.

Ainsi, lors du montage du groupe moto-propulseur, les biellettes 1, 11 se disposent automatiquement dans une position d'équilibre stable du moto-propulseur 30 dans laquelle ce dernier ne génère pas de vibration lorsque qu'il fonctionne au ralenti. Les variations de longueur des biellettes 1, 11 sont par exemple de l'ordre de 5 à 15 mm.

Puis, lorsqu'un effort supérieur à un seuil déterminé est exrecé sur les biellettes 1, 11, leur mécanisme de variation de longueur se verrouille. Ainsi, les biellettes 1, 11 se figent en longueur dans la position d'équilibre qui minimise les vibrations dues à la rotation du moteur au régime ralenti.

On conçoit donc aisément que l'invention, tout en étant de structure simple, présente de nombreux avantages. Ainsi, les biellettes ne nécessitent aucune opération de réglage lors du montage du véhicule. De plus, les biellettes permettent de corriger d'éventuelles dispersions mécaniques ou dimensionnelles sur des véhicules produits en grand nombre. Par ailleurs, l'invention permet d'obtenir sur des véhicules produits en grande série des prestations identiques à celles de véhicules prototypes. Les biellettes selon l'invention garantissent également une bonne tenue de la suspension lors du vieillissement du véhicule, notamment lors du fluage des cales porteuses.

Bien entendu, l'invention ne saurait se limiter à l'exemple de réalisation décrit ci-dessus. Ainsi, on peut envisager un dispositif de suspension utilisant une ou plus de deux biellettes selon l'invention. Par ailleurs, la configuration des biellettes peut être différente de celle représenté à la figure 1, en fonction notamment de l'architecture du véhicule.

## Revendications

1. Biellette de suspension d'un groupe moto-propulseur de véhicule automobile destinée à être montée sensiblement verticalement, pour relier un groupe moto-propulseur (30) à la structure (13, 14) d'ug véhicule, la biellette (1, 11) êtant apte à s'allonger, respectivement se rétracter, lorsqu'elle est soumise à des efforts de traction, respectivement de compression, **caractérisée en ce qu'**elle comporte des moyens (4, 5, 10, 15, 101, 31) de régulation de longueur conformés pour, d'une part, permettre une variation de longueur de la biellette (1) lorsque celle-ci est soumise à des efforts de compression/traction dits "de faible intensité", tels que ceux générés lors du montage de la biellette (1, 11) sur le véhicule et, d'autre part, empêcher une variation de longueur de la biellette (1, 11) lorsque celle-ci est soumise à des efforts de compression/traction dits "d'intensité élevée" qui sont supérieurs aux efforts de montage, les efforts d'intensité élevée correspondant, par exemple, aux efforts générés lors du fonctionnement du groupe motopropulseur (30), et **en ce qu'**elle est constituée d'un ensemble comprenant un piston (3) et un cylindre (6), la première (12) extrémité de la biellette (1) étant solidaire de la tige (2) du piston (3) tandis que la seconde (18) extrémité est solidaire du cylindre (6), et **en ce que** les moyens de régulation de longueur comportent un fluide (15) incompressible disposé dans le cylindre (6), des moyens (4, 5) formant clapet aptes à assurer le passage du fluide entre deux volumes (16, 17) de travail situés respectivement de part et d'autre du piston (3), et des moyens (9, 10, 31, 101) de compensation du volume de la tige (2) entrant ou sortant du cylindre (6) et **en ce que** les moyens de compensation sont constitués d'un système (10, 101) à clapet dimensionné pour permettre, d'une part le passage du fluide (15) entre un volume de travail (17) et un volume (31) de compensation lors d'une compression/traction de faible intensité et, d'autre part, bloquer ce même passage lors d'un effort de compression/traction d'intensité élevée.

2. Biellette de suspension selon la revendication 1, **caractérisée en ce que** les moyens (4, 5, 10, 15, 101, 31) de régulation de longueur assurent automatiquement les variations et le blocage de longueur de la biellette (1) en réponse aux sollicitations en traction/compression.

3. Biellette de suspension selon la revendication 1 ou 2, **caractérisée en ce qu'**elle comporte deux parties (2, 3) aptes coulisser l'une par rapport à l'autre.

4. Biellette de suspension selon la revendication 1, 2 ou 3 **caractérisée en ce que** les moyens formant clapet (4, 5) sont formés sur le piston (3) et sont dimensionnés pour permettre, d'une part le passage du fluide (15) d'un volume de travail (17, 16) à l'autre (16, 17) lors d'une compression/traction de faible intensité, et pour, d'autre part, bloquer le passage du fluide (15) au travers du piston (3) lors d'un effort de compression/traction d'intensité élevée.

5. Biellette de suspension selon l'une quelconque des revendications 1 à 4 **caractérisée en ce que** le système (10, 101) à clapet comporte un bouchon (101) hydraulique qui coopère avec le passage (19) du fluide vers le volume (31) de compensation, le bouchon (101) étant agencé de façon à permettre la circulation du fluide (15) entre un volume de travail (17) et le volume (31) de compensation lors d'une compression/traction de faible intensité et, d'autre part, bloquer de façon étanche par clippage ce même passage (19) lors d'un effort de compression/traction d'intensité élevée.

6. Dispositif de suspension d'un groupe moto-propulseur de véhicule automobile reliant un groupe moto-propulseur (30) à la structure (13, 14) d'un véhicule, **caractérisé en ce qu'**il comporte au moins une biellette (1) de suspension conforme à l'une quelconque des revendications précédentes.

7. Dispositif de suspension d'un groupe moto-propulseur de véhicule automobile reliant un groupe moto-propulseur (30) à la structure (13, 14) d'un véhicule **caractérisé en ce qu'**il comporte deux biellettes (1, 11) de suspension conforme à l'une quelconque des revendications 1 à 5 et disposées respectivement à l'avant et à l'arrière du groupe moto-propulseur (30).

8. Dispositif de suspension selon la revendication 7 **caractérisé en ce que** qu'une première des biellettes (1) relie le groupe moto-propulseur (30) du véhicule à un élément (13) de structure avant du véhicule telle qu'une traverse, la seconde biellette (11) reliant un carter (22) d'embrayage et/ou de boîte de vitesses à un élément (23) de structure dit arrière tel qu'une traverse ou un berceau.

## Patentansprüche

1. Aufhängungsstange einer Antriebseinheit eines Kraftfahrzeugs, die dazu bestimmt ist, im Wesentlichen senkrecht montiert zu werden, um eine Antriebseinheit (30) mit dem Chassis (13, 14) eines Kraftfahrzeugs zu verbinden, wobei die Stange (1, 11) sich verlängern bzw. verkürzen kann, wenn sie Zug- bzw. Druckkräften ausgesetzt ist, **dadurch gekennzeichnet, dass** die Stange Mittel (4, 5, 10, 15, 101, 31) zur Längeneinstellung aufweist, um einerseits eine Längenveränderung der Stange (1) zu ermöglichen, wenn diese Zug- bzw. Druckkräften ausgesetzt ist von "schwacher Intensität", wie solchen, die während der Montage der Stange (1, 11) am Kraftfahrzeug auftreten und andererseits die eine Längenänderung der Stange (1, 11) verhindern, während diese Zug- bzw. Druckkräften "hoher Intensität" ausgesetzt ist, welche größer als die bei der Montage auftretenden Kräfte sind und die Kräfte hoher Intensität beispielsweise solchen entsprechen, die während des Betriebs der Antriebseinheit (30) auftreten und dadurch, dass die Stange aus einer Anordnung besteht, die einen Kolben (3) und einen Zylinder (6) aufweist, wobei das erste Ende (12) der Stange (1) fest mit der Stange (2) des Kolbens (3) verbunden ist, während das zweite Ende (18) fest mit dem Zylinder (6) verbunden ist, und dadurch, dass die Mittel zur Einstellung der Länge ein nichtkomprimierbares Fluid (15) aufweisen, welches in dem Zylinder (6) angeordnet ist und Mittel (4, 5), die ein Ventil bilden, welches den Fluiddurchgang zwischen zwei Arbeitsvolumen erlauben, die jeweils zur einen und anderen Seite des Kolbens (3) liegen und Mittel (9, 10, 31, 101) zur Kompensation des Volumens der Stange (2) in den Zylinder (6) eindringen oder aus ihm heraustreten, und dadurch, dass die Kompensationsmittel aus einem System (10, 101) bestehen mit einem Ventil, welches so dimensioniert ist, dass es einerseits den Durchgang des Fluids (15) zwischen einem Arbeitsvolumen (17) und einem Kompensationsvolumen (31) während einer Kompression bzw. Zugbelastung schwacher Intensität ermöglicht und andererseits dieselbe Passage blockiert, während eine Kompressions- bzw. Traktionskraft hoher Intensität auftritt.

2. Aufhängungsstange nach Anspruch 1, **dadurch gekennzeichnet, dass** die Mittel (4, 5, 10, 15, 101, 31) zur Einstellung der Länge automatisch die Veränderung und das Blockieren der Länge der Stange (1) je nach Zug- oder Druckbelastung einstellen.

3. Aufhängungsstange nach Anspruch 1 oder 2, **gekennzeichnet durch** zwei Teile (2, 3), die aufeinander gleiten können.

4. Aufhängungsstange nach Anspruch 1, 2 oder 3, **dadurch gekennzeichnet, dass** die das Ventil (4, 5) bildenden Mittel auf dem Kolben (3) ausgebildet sind und so dimensioniert sind, dass sie einerseits den Durchgang des Fluids (15) eines Arbeitsvolumens (17, 16) in das andere Arbeitsvolumen (16, 17) während einer Kompressions- bzw. Traktionsbeanspruchung schwacher Intensität erlauben und die andererseits den Durchgang (15) durch den Kolben (3) bei einer Kompressions- bzw. Zugbeanspruchung hoher Intensität blockieren.

5. Aufhängungsstange nach einem der Ansprüche 1 bis 4, **dadurch gekennzeichnet, dass** das Ventilsystem (10, 101) einen hydraulischen Verschluss (101) aufweist, der mit der Fluidpassage (19) auf das Kompensationsvolumen (31) hin zusammenarbeitet, wobei der Verschluss (101) so ausgebildet ist, dass er einen Fluidstrom (15) zwischen einem Arbeitsvolumen (17) und dem Kompensationsvolumen (31) während einer Kompressions- bzw. Traktionsbeanspruchung schwacher Intensität ermöglicht und andererseits durch Verstopfen dieser Passage (19) diese dicht abschließt, während eine Kompressions- bzw. Traktionsbeanspruchung hoher Intensität auftritt.

6. Vorrichtung zur Aufhängung einer Antriebseinheit eines Kraftfahrzeugs, welche die Antriebseinheit (30) mit dem Chassis (13, 14) eines Kraftfahrzeugs verbindet, **gekennzeichnet durch** mindestens eine Aufhängungsstange (1) nach einem der vorstehenden Ansprüche.

7. Vorrichtung zur Aufhängung einer Antriebsgruppe eines Kraftfahrzeugs, welche eine Antriebseinheit (30) mit dem Chassis (13, 14) eines Kraftfahrzeugs verbindet, **gekennzeichnet durch** zwei Aufhängungsstangen (1, 11) nach einem der Ansprüche 1 bis 5, die vorne bzw. hinten an der Antriebseinheit (30) angeordnet sind.

8. Aufhängungsvorrichtung nach Anspruch 7, **dadurch gekennzeichnet, dass** eine erste der Stangen (1) die Antriebseinheit (30) des Kraftfahrzeugs an ein Strukturelement (13) an der Vorderseite des Kraftfahrzeugs, wie einer Traverse, befestigt und die zweite Stange (11) ein Kupplungsgehäuse (22) und/ oder ein Getriebegehäuse an einem hinteren Strukturelement (23), wie einer Traverse oder einem Motorträger, verbindet.

## Claims

1. Suspension rod of a motor vehicle power train intended to be mounted substantially vertically, in order to connect a power train (30) to the structure (13, 14) of a vehicle, the rod (1, 11) being capable of being lengthened or retracted respectively, when it is subjected to tractive or compressive efforts respectively, **characterised in that** it comprises length-regulating means (4, 5, 10, 15, 101, 31) shaped, on the one hand, so as to allow a variation in length of the rod (1) when said rod is subjected to what are known as "low-intensity" compressive/tractive efforts, such as those generated when the rod (1, 11) is mounted on the vehicle and, on the other hand, so as to prevent a variation in length of the rod (1, 11) when said rod is subjected to what are known as "high-intensity" compressive/tractive efforts that are greater than the efforts on assembly, the high-intensity efforts corresponding, for example, to the efforts generated during the operation of the power train (30), and **in that** it is constituted by an assembly comprising a piston (3) and a cylinder (6), the first end (12) of the rod (1) being integral with the rod (2) of the piston (3) while the second end (18) is integral with the cylinder (6), and **in that** the length-regulating means comprise a non-compressible fluid (15) placed in the cylinder (6), means (4, 5) forming a valve capable of ensuring the passage of the fluid between two working spaces (16, 17) located respectively on either side of the piston (3), and means (9, 10, 31, 101) for compensating the space of the rod (2) entering or leaving the cylinder (6), and **in that** the compensation means are constituted by a valve system (10, 101) of suitable dimensions to allow, on the one hand, the passage of the fluid (15) between a working space (17) and a compensation space (31) at the time of a low-intensity compression/traction and, on the other hand, to block this same passage at the time of a high-intensity compression/traction.

2. Suspension rod according to Claim 1, **characterised in that** the length-regulating means (4, 5, 10, 15, 101, 31) automatically ensure variations in and locking of the length of the rod (1) in response to tractive/compressive stresses.

3. Suspension rod according to Claim 1 or 2, **characterised in that** it comprises two portions (2, 3) capable of sliding with respect to each other.

4. Suspension rod according to Claim 1, 2 or 3, **characterised in that** the means forming a valve (4, 5) are formed on the piston (3) and are of suitable dimensions, on the one hand, to allow the passage of the fluid (15) from one working space (17, 16) to the other (16, 17) during a low-intensity compression/traction and, on the other hand, to block the passage of the fluid (15) through the piston (3) during a high-intensity compressive/tractive effort.

5. Suspension rod according to any one of Claims 1 to 4, **characterised in that** the valve system (10, 101) comprises a hydraulic plug (101) that cooperates with the passage (19) of the fluid towards the compensation space (31), the plug (101) being arranged so as to allow the circulation of the fluid (15) between a working space (17) and the compensation space (31) during a low-intensity compression/traction and, in addition, to block this same passage (19) tightly by clipping during a high-intensity compressive/tractive effort.

6. Suspension device of a motor vehicle power train connecting a power train (30) to the structure (13, 14) of a vehicle, **characterised in that** it comprises at least one suspension rod (1) in accordance with any one of the preceding claims.

7. Suspension device of a motor vehicle power train connecting a power train (30) to the structure (13, 14) of a vehicle, **characterised in that** it comprises two suspension rods (1, 11) in accordance with any one of Claims 1 to 5 and arranged respectively in front of and behind the power train (30).

8. Suspension device according to Claim 7 **characterised in that** a first one of the rods (1) connects the power train (30) of the vehicle to a front structural element (13) of the vehicle such as a cross-member, the second rod (11) connecting a clutch and/or gear box housing (22) to what is known as a rear structural component (23) such as a cross-member or a cradle.
